# EUROPEAN PATENT SPECIFICATION

(11) **EP 4 583 471 B1**
(45) Date of publication and mention of the grant of the patent: **24.06.2026**
(21) Application number: 22966273.9
(22) Date of filing: 25.11.2022
(51) Int. Cl.: H04W 72/25, H04L 5/00, H04W 76/14

(54) **METHODS FOR SIDELINK COMMUNICATION, TERMINAL DEVICES, AND NETWORK DEVICES**
VERFAHREN ZUR SIDELINK-KOMMUNIKATION, ENDGERÄTEVORRICHTUNGEN UND NETZWERKVORRICHTUNGEN
PROCÉDÉS DE COMMUNICATION DE LIAISON LATÉRALE, ÉQUIPEMENTS TERMINAUX ET DISPOSITIFS DE RÉSEAU

(43) Date of publication of application: 09.07.2025
(73) Proprietor: GUANGDONG OPPO MOBILE TELECOMMUNICATIONS CORP., LTD., Dongguan, Guangdong 523860 (CN)
(72) Inventor: DING, Yi, Dongguan, Guangdong 523860 (CN); WANG, Hao, Dongguan, Guangdong 523860 (CN)
(74) Representative: RGTH
(86) International application number: PCT/CN2022/134470
(87) International publication number: WO 2024/108585

(56) References cited:
- EP-B1- 3 480 974
- WO-A1-2019/047542
- WO-A1-2020/024110
- WO-A1-2020/167837
- CN-A- 109 039 493
- CN-A- 110 268 736
- CN-A- 110 392 988
- CN-A- 112 514 440
- US-A1- 2017 142 746
- VIVO: "Channel access mechanism for sidelink on unlicensed spectrum", vol. RAN WG1, no. e-meeting; 20221010 - 20221019, 30 September 2022 (2022-09-30), XP052276566, Retrieved from the Internet <URL:sidelinkhttps://ftp.3gpp.org/tsg_ran/WG1_RL1/TSGR1_110b-e/Docs/R1-2208643.zip R1-2208643 Channel access mechanism.docx> [retrieved on 20220930]
- HUAWEI ET AL: "Remaining details of physical layer procedures for sidelink", vol. RAN WG1, no. E-meeting; 20201026 - 20201113, 17 October 2020 (2020-10-17), XP051939818, Retrieved from the Internet <URL:https://ftp.3gpp.org/tsg_ran/WG1_RL1/TSGR1_103-e/Docs/R1-2007613.zip R1-2007613.docx> [retrieved on 20201017]

## Description

### TECHNICAL FIELD

This application relates to the field of communications technologies, and more specifically, to a method for sidelink communication, a terminal device, and a network device.

### BACKGROUND

In some communications systems, through a candidate starting symbol mechanism, a success rate of a terminal device accessing a channel in an unlicensed spectrum may be increased, or a capability of a terminal device to contend for a channel with an inter-system terminal may be improved. In a candidate starting symbol mechanism, sidelink communication may be affected to some extent. WO2019/047542A1 provides a method for RSSI measurement, a network device, and a terminal device. The method includes: a terminal device receives a measurement configuration message for an RSSI, the measurement configuration message comprising indication information of a time resource for an RSSI measurement, where the time resource comprises: a first downlink symbol and/or a second downlink symbol of a time slot in which a synchronization signal block is located; and a received signal power on the first downlink symbol and/or on the second downlink symbol is measured, where the first downlink symbol comprises a downlink symbol at where the synchronization signal block is located, and the second downlink symbol comprises at least one downlink symbol other than the first downlink symbol. WO2020/167837A1 provides systems and methods of configuring received signal strength indicator (RSSI) measurements to determine crosslink interferences (CLI). For instance, a user equipment (UE) can receive, using radio front-end circuitry, a RSSI resource configuration for CLI measurement from a base station in a 5G network. The UE can then measure a RSSI of one or more received signals based at least in part on the RSSI resource configuration. The UE can then perform one or more CLI measurements based at least in part on the measured RSSI. The RSSI resource configuration includes an identifier information element (IE), one or more slot-level indication IEs, one or more symbol-level indication IEs, one or more physical resource block (PRB)-level indication IEs, one or more resource element (RE) pattern indication IEs, and one or more receive beam indication IEs.

### SUMMARY

This application provides a terminal device, a network device and corresponding methods. The invention is set out in the appended set of claims.

### BRIEF DESCRIPTION OF DRAWINGS

FIG. 1 is a schematic diagram of a wireless communications system to which embodiments of this application are applicable.
FIG. 2 is an example diagram of an application scenario of sidelink communication in a first mode.
FIG. 3 is an example diagram of an application scenario of sidelink communication in a second mode.
FIG. 4 is an example diagram of a slot structure for sidelink communication.
FIG. 5 is an example diagram of measuring, by a terminal device, a channel busy ratio (channel busy ratio, CBR).
FIG. 6 is an example diagram of another slot structure for sidelink communication.
FIG. 7 is a schematic flowchart of a method for sidelink communication according to an embodiment of this application.
FIG. 8 is a schematic structural diagram of a terminal device according to an embodiment of this application.
FIG. 9 is a schematic structural diagram of a network device according to an embodiment of this application.
FIG. 10 is a schematic structural diagram of an apparatus used for communication according to an embodiment of this application.

### DESCRIPTION OF EMBODIMENTS

Technical solutions in this application are described below with reference to the accompanying drawings. For ease of understanding, the following first describes terms and communication processes involved in this application.

### Communications system

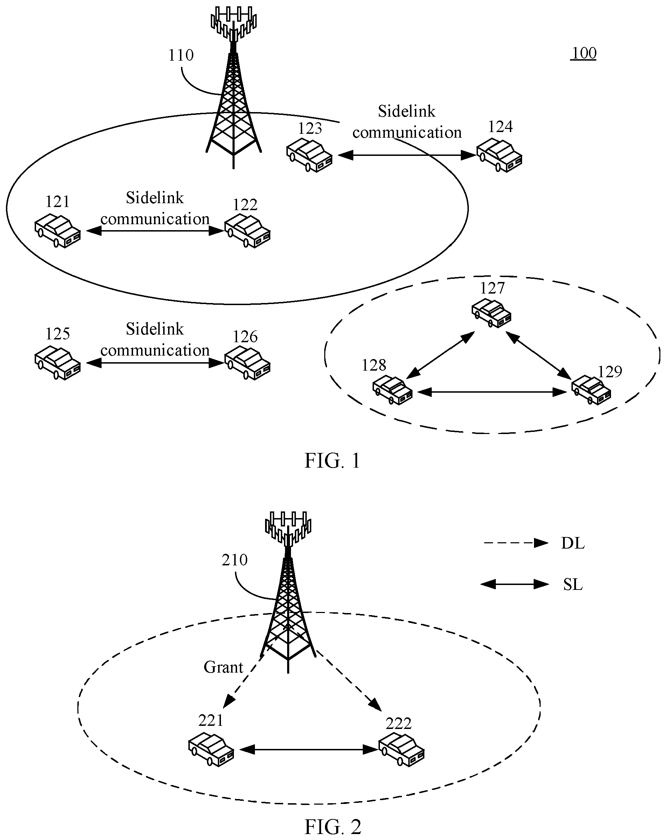

FIG. 1 is an example diagram of a wireless communications system 100 to which embodiments of this application are applicable. The wireless communications system 100 may include one or more communications devices. For example, the one or more communications devices may include a network device 110 and terminals 121 to 129. The network device 110 may provide communication coverage for a specific geographic area, and may communicate with a terminal located in the coverage area.

In some implementations, terminal devices may communicate with each other by using sidelink (sidelink, SL). Sidelink communication may also be referred to as proximity services (proximity services, ProSe) communication, unilateral communication, side link communication, device-to-device (device to device, D2D) communication, direct link communication, or the like. A vehicle to everything (vehicle to everything, V2X) system may also be implemented in a manner of direct communication between terminals (that is, sidelink communication).

In some implementations, sidelink data may be transmitted between terminal devices by using sidelink. The sidelink data may include data and/or control signalling. In some implementations, the sidelink data may be, for example, a physical sidelink control channel (physical sidelink control channel, PSCCH), a physical sidelink shared channel (physical sidelink shared channel, PSSCH), a PSCCH demodulation reference signal (demodulation reference signal, DMRS), a PSSCH DMRS, a physical sidelink feedback channel (physical sidelink feedback channel, PSFCH), or a sidelink synchronization signal block (sidelink synchronization signal block, S-SSB). The S-SSB includes a sidelink primary synchronization signal (sidelink primary synchronization signal, S-PSS), a sidelink secondary synchronization signal (sidelink secondary synchronization signal, S-SSS), and a physical sidelink broadcast channel (physical sidelink broadcast channel, PSBCH).

Different from a manner in which communication data is received or transmitted by a network device in a conventional cellular system, a manner of direct communication between terminal devices is used in a sidelink communications system (for example, a vehicle-to-everything system). As a result, sidelink communication has higher spectral efficiency and a lower transmission delay.

With reference to FIG. 1, the following describes several common sidelink communication scenarios. Sidelink communication may be classified into three scenarios depending on whether terminals on a sidelink are located in coverage of the network device. In a scenario 1, the terminals perform sidelink communication within the coverage of the network device. In a scenario 2, part of the terminals performs sidelink communication within the coverage of the network device. In a scenario 3, the terminals perform sidelink communication outside the coverage of the network device.

As shown in FIG. 1, in the scenario 1, terminals 121 and 122 may communicate with each other over a sidelink, and the terminals 121 and 122 are both within the coverage of the network device 110. In other words, the terminals 121 and 122 are both within coverage of a same network device 110. In this scenario, the network device 110 may transmit configuration signalling to the terminals 121 and 122, and accordingly, the terminals 121 and 122 communicate with each other over the sidelink based on the configuration signalling.

As shown in FIG. 1, in the scenario 2, terminals 123 and 124 may communicate with each other over a sidelink, the terminal 123 is within the coverage of the network device 110, and the terminal 124 is outside the coverage of the network device 110. In this scenario, the terminal 123 receives configuration information from the network device 110, and performs communication over the sidelink based on a configuration of configuration signalling. However, since the terminal 124 is outside the coverage of the network device 110, the terminal 124 cannot receive the configuration information from the network device 110. In this case, the terminal 124 may obtain a configuration of sidelink communication based on pre-configured (pre-configuration) configuration information and/or configuration information transmitted by the terminal 123 within the coverage, so that the terminal 124 communicates with the terminal 123 over the sidelink based on the obtained configuration.

In some cases, the terminal 123 may transmit the configuration information to the terminal 124 through a sidelink broadcast channel (physical sidelink broadcast channel, PSBCH), to configure the terminal 124 to perform communication over the sidelink.

As shown in FIG. 1, in the scenario 3, terminals 125 to 129 are all outside the coverage of the network device 110 and cannot communicate with the network device 110. In this case, all the terminals may perform sidelink communication based on pre-configuration information.

In some cases, the terminals 127 to 129 outside the coverage of the network device may form a communication cluster, and the terminals 127 to 129 in the communication cluster may communicate with each other. In addition, the terminal 127 in the communication cluster may serve as a central control node, which is also referred to as a cluster header (cluster header, CH). Correspondingly, the other terminals in the communication cluster may be referred to as "cluster members".

The terminal 127, as the CH, may have one or more of the following functions: being responsible for establishment of the communication cluster; joining and leaving of the cluster members; resource coordination, assignment of sidelink transmission resources for the cluster members, and receiving of sidelink feedback information from the cluster members; resource coordination with another communication cluster; or the like.

It should be noted that FIG. 1 exemplarily shows one network device and a plurality of terminal devices. Optionally, the wireless communications system 100 may include a plurality of network devices, and another quantity of terminal devices may be included in coverage of each network device. This is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long-term evolution (long term evolution, LTE) system, an LTE frequency division duplex (frequency division duplex, FDD) system, and an LTE time division duplex (time division duplex, TDD) system. The technical solutions provided in this application may be further applied to a future communications system, such as a 6^{th} generation mobile communications system or a satellite communications system.

The terminal in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal device, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to serve as a base station. For example, the terminal device may function as a scheduling entity that provides sidelink data between terminal devices in V2X, D2D, or the like. For example, a cellular phone and a vehicle communicate with each other by using sidelink data. A cellular phone and a smart home device communicate with each other, without the relay of a communication signal through a base station.

The network device in embodiments of this application may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or apparatus described above. Alternatively, the base station may be a mobile switching center, a device that functions as a base station in device-to-device D2D, V2X, or machine-to-machine (machine-to-machine, M2M) communications, a network-side device in a 6G network, a device that functions as a base station in a future communications system, or the like. The base station may support networks of a same access technology or different access technologies. A specific technology and specific device used by the network device are not limited in embodiments of this application.

The base station may be stationary or mobile. For example, a helicopter or an unmanned aerial vehicle may be configured to function as a mobile base station, and one or more cells may move depending on a location of the mobile base station. In another example, a helicopter or an unmanned aerial vehicle may be configured to serve as a device in communication with another base station.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may alternatively be implemented by software functions running on hardware, or by virtualization functions instantiated on a platform (for example, a cloud platform).

### Mode of sidelink communication

In some standards or protocols (for example, 3rd generation partnership project (3rd generation partnership project, 3GPP)), two modes (or referred to as transmission modes) of sidelink communication, that is, a first mode (mode-1) and a second mode (mode-2), are defined.

In the first mode, a resource (the resource mentioned in this application may also be referred to as a transmission resource, such as a time frequency resource) of a terminal device is allocated by a network device. The terminal device may transmit data on a sidelink by using the resource allocated by the network device. The network device may allocate a resource for a single time of transmission to the terminal device, or may allocate a resource for semi-static transmission to the terminal device. The first mode may be applied to a scenario in which the terminal device is covered by the network device, for example, the scenario shown in FIG. 2. In the scenario shown in FIG. 2, a terminal device 221 and a terminal device 222 are located within network coverage of a network device 210. The network device 210 may allocate a resource used in a sidelink transmission process to the terminal device 221 and the terminal device 222. As shown in FIG. 2, the network device may transmit a grant (grant) by using a downlink (downlink, DL) to allocate a resource used in a sidelink transmission process to the terminal device 221 and the terminal device 222, so that the terminal device 221 and the terminal device 222 may communicate with each other
on a sidelink. In some embodiments, the first mode may also be referred to as a mode A.

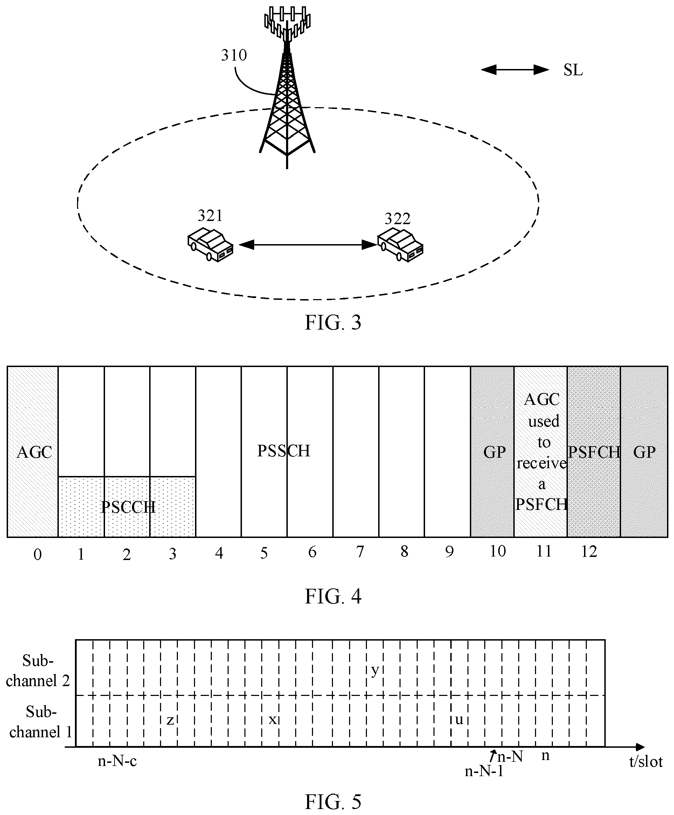

In the second mode, the terminal device may independently select one or more resources from a resource pool (resource pool, RP). Specifically, the terminal device may select a transmission resource from the resource pool by listening, or may randomly select a transmission resource from the resource pool. For example, in the scenario shown in FIG. 3, a terminal device 321 is located in network coverage. The terminal device 321 may independently select a resource from a pre-configured resource pool for sidelink transmission. Alternatively, the terminal device 321 may independently select one or more resources from the resource pool configured by a network device 310 for sidelink transmission. It should be noted that if the terminal device 321 is located outside the network coverage, the terminal device 321 may also use the second mode to perform resource selection. In some embodiments, the second mode may also be referred to as a mode B.

### Physical layer structure of a sidelink communications system

FIG. 4 is an example diagram of a slot (slot) structure for some sidelink communications systems (such as an NR-V2X system).

As shown in FIG. 4, a 1^{st} symbol (such as an orthogonal frequency division multiplexing (orthogonal frequency division multiplexing, OFDM) symbol) in a slot is an automatic gain control (automatic gain control, AGC) symbol. When receiving data, the terminal device may adjust received power in the AGC symbol, for example, adjust the received power to be suitable for demodulation. When transmitting data, the terminal device may repeatedly transmit, in the AGC symbol, content of a symbol next to the AGC symbol. A PSCCH may be configured to carry first sidelink control information. The first sidelink control information mainly includes a field related to resource listening. A PSSCH may be configured to carry data and second sidelink control information. The second sidelink control information mainly includes a field related to data demodulation. In some embodiments, a PSFCH resource may also be configured in a slot. For example, a PSFCH symbol shown in FIG. 4 may be configured in the slot. Depending on resource pool configuration, the PSFCH symbol may appear once every 1, 2, or 4 slots. In some embodiments, when no PSFCH resource is configured in a slot, a guard period (guard period, GP) symbol (also referred to as a gap (GAP) symbol) between the PSSCH and the PSFCH, the AGC symbol used to receive the PSFCH, and the PSFCH symbol may all be used to carry the PSSCH. Generally, a last symbol in a slot is a GP symbol. In other words, a symbol next to a last symbol that carries the PSSCH or PSFCH may be a GP symbol. The terminal device may perform transmission/reception switch-over in the GP symbol without performing transmission. When there is a PSFCH resource in the slot, there may also be a GP symbol between the PSSCH symbol and the PSFCH symbol. This is because the terminal device may perform transmission on the PSSCH and reception on the PSFCH, which requires a GP symbol for switching between transmission and reception.

### SL RSSI measurement

SL RSSI may be defined as a linear average value of received power on one or more sub-channels within symbols starting from a 2^{nd} symbol in a slot. In some embodiments, the 2^{nd} symbol may be the second one of symbols included in the slot. The slot that includes 14 OFDM symbols shown in FIG. 4 is used as an example. The 14 OFDM symbols are a symbol 0 to a symbol 13 in sequence, and the 2^{nd} symbol may be the symbol 1. In some embodiments, the 2^{nd} symbol may be the second one of symbols used for sidelink transmission in the slot. The sidelink transmission may be, for example, PSCCH transmission and/or PSSCH transmission. For example, according to network configuration, if symbols 3 to 13 in a slot are used for sidelink transmission, the 2^{nd} symbol is the symbol 4.

In some embodiments, the terminal device may measure received power on one or more sub-channels within each of symbols starting from the 2^{nd} symbol in the slot, and average the received power corresponding to the measured symbols to obtain the SL RSSI. It may be understood that the SL RSSI is a measurement result for a slot in time domain and one or more sub-channels in frequency domain, or the SL RSSI is a measurement result for one or more sub-channels within a slot. The averaging is required to be performed among symbols in the slot.

FIG. 4 is still used as an example for description. Assuming that all of the OFDM symbols in the slot are used for sidelink transmission, and the example of FIG. 4 corresponds to one sub-channel in the frequency domain, the SL RSSI may be a linear average value of the received power measured on the sub-channel in each of the symbols 1 to 12. That is, received power on the sub-channel is measured in each of the symbols 1 to 12, and a linear average value of the received power corresponding to the measured symbols is calculated.

It should be noted that one sub-channel may correspond to a plurality of physical resource blocks (physical resource block, PRB) in frequency domain. For example, one sub-channel may correspond to a plurality of consecutive PRBs.

The SL RSSI may be applied to a plurality of technologies. For example, the SL RSSI may be applied to channel busy ratio (channel busy ratio, CBR) measurement.

### CBR measurement

CBR is a basic measurement metric used to support congestion control and also one of main applications of SL RSSI measurement.

CBR may be defined as a ratio of a quantity of sub-channels whose SL RSSI is higher than a configured threshold to a total quantity of sub-channels in a resource pool over a CBR measurement window [n-c, n-1], where c is equal to 100 or 100 · 2*^{µ}* slots, and µ is related to a subcarrier spacing. For example, subcarrier spacings of 15 kHz, 30 kHz, 60 kHz, and 120 kHz correspond to µ values of 0, 1, 2, and 3, respectively.

It should be noted that a minimum scheduling unit in the resource pool in time domain may be one slot, and a minimum scheduling unit in frequency domain may be one sub-channel. For example, a possible value of a frequency domain width of a sub-channel is 10, 12, 15, 20, 25, 50, 75, or 100 PRBs.

FIG. 5 is an example diagram of CBR measurement performed by a terminal device. In FIG. 5, it is assumed that a resource pool used by the terminal device includes only two sub-channels (a sub-channel 1 and a sub-channel 2). All slots in FIG. 5 belong to the resource pool used by the terminal device. The terminal device is to perform transmission in the slot n, and measure or count a CBR in the slot n-N. For the CBR, if the SL RSSI measured by the terminal device on the four sub-channels x, z, y, u within the slot [n-N-c,n-N-1] is greater than the configured threshold, then the CBR is 4 divided by a total quantity of sub-channels that are within the slot [n-N-c,n-N-1] and that belong to the resource pool used by the terminal device. N may be related to a processing capability of the terminal device.

### Unlicensed (unlicensed) spectrum communication

The sidelink communication technology may operate in an unlicensed spectrum. In an unlicensed spectrum, the terminal device may perform listen before talk (listen before talk, LBT) first, and then access a channel for transmission only after the LBT succeeds.

LBT may be specifically classified into Type 1 (type 1) and Type 2 (type 2), which are each described below.

During LBT of Type 1, the terminal device may generate a random count value. If a slot listened on is idle, the count value is decremented by 1; or if the slot is busy, the count value is not decremented. In a case in which the count value is decremented to 0, the terminal device is allowed to access a channel for transmission. If the count value is decremented to 0 but a communications device has no data to transmit, when the terminal device is required to transmit data subsequently, it is unnecessary to re-generate a count value, but only required to perform LBT with a fixed duration. If the LBT of the fixed duration succeeds, that is, if a channel remains idle within the fixed duration, the terminal device is allowed to access the channel.

LBT of Type 2 may be classified into Type 2A (type 2A) and Type 2B (type 2B).

During LBT of Type 2A, the terminal device may listen on a channel for a duration of 25 microseconds (denoted as Tshort). If all slots listened on within Tshort are idle, the terminal device may directly access the channel.

During LBT of Type 2B, the communications device may listen on a channel for a duration of 16 microseconds (denoted as Tf). If all slots listened on within Tf are idle, the terminal device may directly access the channel.

### Candidate starting symbol

As described above, when the sidelink communication technology operates on an unlicensed spectrum, the terminal device is required to perform LBT, and the terminal device can access a channel only when the LBT succeeds. Otherwise, the terminal device cannot access the channel. In some communications systems (such as a sidelink unlicensed (sidelink unlicensed, SL-U) system), setting a candidate starting symbol may be considered to improve a slot structure, thereby increasing a success rate of a terminal device accessing a channel in an unlicensed spectrum or enhancing a capability of a terminal device to contend for a channel with an inter-system terminal (for example, a Wi-Fi terminal device).

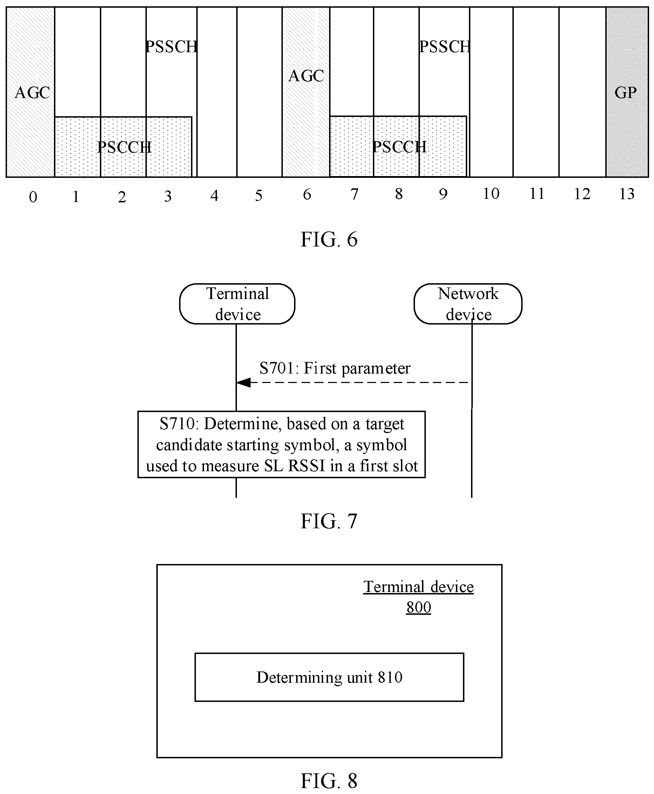

The candidate starting symbol mechanism may provide the terminal device with an additional channel access opportunity. In some communication standards, a mechanism of configuring a maximum of two candidate starting symbols in a slot has been introduced. For example, the terminal device may perform LBT prior to a 1^{st} candidate starting symbol (for example, a symbol 0). If the LBT fails, the terminal device may still attempt to perform LBT again prior to a 2^{nd} candidate starting symbol (for example, a symbol 6). It may be learned that, the terminal device may perform access starting from the 1^{st} candidate starting symbol and perform transmission until the end of the slot, or the terminal device may perform access starting from the 2^{nd} candidate starting symbol and perform transmission until the end of the slot. For example, a slot structure may be as shown in FIG. 6. Since the 2^{nd} candidate starting symbol is set, compared with FIG. 4, in FIG. 6, the 2^{nd} candidate starting symbol may correspond to an additional AGC symbol, that is, a symbol 6 in FIG. 6.

The applicant finds that the candidate starting symbol mechanism may affect sidelink communication. Specifically, the candidate starting symbol mechanism may affect SL RSSI measurement. For example, in a related technology, SL RSSI is obtained by performing measurement starting from the 2^{nd} symbol and calculating an average value, which means that the measurement and calculation of the SL RSSI do not include measurement in the AGC symbol corresponding to the 1^{st} symbol. In the candidate starting symbol mechanism, more AGC symbols may be introduced, which may result in inaccurate S-RRSI measurement. For another example, in the candidate starting symbol mechanism, the terminal device may transmit sidelink data starting from the 1^{st} candidate starting symbol in the slot, or may transmit data starting from a subsequent candidate starting symbol. When the terminal device transmits data starting from a candidate starting symbol subsequent to the 1^{st} candidate starting symbol, if the terminal device that performs measurement still measures the SL RSSI starting from the 2^{nd} symbol, which may result in underestimated result. The following uses FIG. 6 as an example for description. In FIG. 6, some terminal devices perform transmission starting from the symbol 0, while some terminal devices perform transmission starting from the symbol 6. In this case, since some terminal devices do not transmit data in the symbols 0 to 5, a terminal device that performs measurement fails to measure received power in these symbols. In this case, if the terminal device that performs measurement still calculates the SL RSSI by averaging measured values in the symbols 1 to 12, an underestimated SL RSSI may be obtained.

This application provides a method for sidelink communication, to resolve the foregoing problem. FIG. 7 is a schematic flowchart of a method for sidelink communication according to an embodiment of this application. The method shown in FIG. 7 may be performed by a terminal device and/or a network device. The method shown in FIG. 7 may include step S710.

In step S710, a terminal device may determine, based on a target candidate starting symbol, symbols used to measure SL RSSI in a first slot.

The symbols used to measure the SL RSSI may be determined based on the target candidate starting symbol. In other words, the symbol or symbols to be used to measure the SL RSSI may be determined from symbols in the first slot based on the target candidate starting symbol. The target candidate starting symbol may be one of a plurality of candidate starting symbols in the first slot. For example, the target candidate starting symbol may include a 2^{nd} candidate starting symbol in a first slot.

It may be learned that the symbols used to measure the SL RSSI in the first slot may be determined depending on different candidate starting symbols. Therefore, according to this application, an abnormal SL RSSI measurement due to candidate starting symbols set in a related technology can be avoided.

The following provides some embodiments to describe the method in which the terminal device determines, based on the target candidate starting symbol, the symbols used to measure the SL RSSI.

In an implementation, the symbols used to measure the SL RSSI may not include the target candidate starting symbol. In other words, at least one symbol in the first slot may be used to measure the SL RSSI, and the at least one symbol may not include the target candidate starting symbol. That is, one or more candidate starting symbols in the first slot may not participate in SL RSSI measurement. The following still uses FIG. 6 as an example for description. In FIG. 6, the target candidate starting symbol may be a 2^{nd} candidate starting symbol, that is, the symbol 6. The symbols used to measure the SL RSSI may not include the symbol 6.

As described above, definition of the SL RSSI is to perform measurement staring from the 2^{nd} symbol in the slot and averaging, that is, the symbols used to measure the SL RSSI do not include the AGC symbol (the 1^{st} symbol). For example, as shown in FIG. 4, the symbols used to measure the SL RSSI do not include the symbol 0 (the 1^{st} symbol in the slot). In the candidate starting symbol mechanism, an additional AGC symbol, that is, an AGC symbol corresponding to a candidate starting symbol, is introduced. According to this application, a measurement result in the additional AGC symbol is not counted when measuring the SL RSSI, such that a measurement result of the SL RSSI is more in line with a communication requirement.

The symbols used to measure the SL RSSI may start from a 2^{nd} symbol in the first slot. In some embodiments, the 2^{nd} symbol may be the second one of symbols included in the first slot. For example, if the first slot includes 14 symbols, which are respectively symbols 0 to 13, the 2^{nd} symbol may be the symbol 1. In some embodiments, the 2^{nd} symbol may be the second one of symbols used for sidelink transmission in the first slot. For example, according to network configuration, if the symbols 3 to 13 in the first slot are used for sidelink transmission, the 2^{nd} symbol is the symbol 4.

In some embodiments, whether the symbols used to measure the SL RSSI start from the 2^{nd} symbol in the first slot may be determined based on a status of sidelink transmission. For example, when the terminal device detects sidelink transmission in a 1^{st} candidate starting symbol in the first slot, the symbols used to measure the SL RSSI may start from the 2^{nd} symbol in the first slot. Alternatively, when the terminal device detects no sidelink transmission in a 1^{st} candidate starting symbol in the first slot, the symbols used to measure the SL RSSI may not start from the 2^{nd} symbol in the first slot.

It may be understood that the embodiments disclosed in this application may be separately implemented, or may be implemented in a combined manner. For example, the symbols used to measure the SL RSSI do not include the target candidate starting symbol, and the symbols used to measure the SL RSSI start from the 2^{nd} symbol in the first slot. The two embodiments may be implemented in combination. In an implementation, the SL RSSI may be defined as a linear average value of received power on one or more sub-channels starting from the 2^{nd} symbol in the first slot, excluding the 2^{nd} candidate starting symbol. For example, the terminal device measures received power on one or more sub-channels within each symbol, except the 2^{nd} candidate starting symbol, starting from the 2^{nd} OFDM symbol, and averages the received power corresponding to the measured symbols to obtain the SL RSSI.

The following description is provided still using the slot shown in FIG. 6 as an example of the first slot. The target candidate starting symbol may be the symbol 6 shown in FIG. 6. In some embodiments, the 2^{nd} symbol in the first slot may be the symbol 1, and the symbols used to measure the SL RSSI in the first slot may include symbols 1 to 5 and symbols 7 to 12. In some embodiments, if it is configured by a network that the symbols 3 to 13 in the first slot are used for sidelink transmission, the 2^{nd} symbol in the first slot may be the symbol 4. In this case, the symbols used to measure the SL RSSI in the first slot may include the symbol 4, the symbol 5, and the symbols 7 to 12.

A starting symbol used to measure the SL RSSI may also be determined based on the target candidate starting symbol. For example, a first symbol may be a symbol next to the target candidate starting symbol. The symbols used to measure the SL RSSI may start from the first symbol.

In an implementation, the SL RSSI may be defined as a linear average value of received power on one or more sub-channels starting from the symbol next to the target candidate starting symbol in the first slot. For example, the terminal device may determine the target candidate starting symbol, measure received power on one or more sub-channels within each of symbols starting from the symbol next to the target candidate starting symbol, and then average the received power corresponding to the measured symbols.

The following description is provided still using the slot shown in FIG. 6 as an example of the first slot. In FIG. 6, all of the OFDM symbols in the first slot are used for sidelink transmission, and the example of FIG. 6 corresponds to one sub-channel in the frequency domain. The target candidate starting symbol is a 2^{nd} candidate starting symbol in the first slot, that is, the symbol 6. Then, the SL RSSI is a linear average value of received power measured on the sub-channel in each of symbols 7 to 12, that is, received power on the sub-channel is measured in each of the symbols 7 to 12 and a linear average value of the received power corresponding to the measured symbols is calculated.

In some embodiments, in a case in which a first condition is met, the symbols used to measure the SL RSSI may start from the first symbol. The first condition may include: no sidelink transmission being detected in the 1^{st} candidate starting symbol in the first slot; and/or sidelink transmission being detected in the target candidate starting symbol. It may be understood that if a candidate starting symbol starting from which the terminal device performs sidelink transmission is detected, SL RSSI measurement may be performed starting from the candidate starting symbol.

According to this application, the symbols used to measure the SL RSSI may not include a symbol before the target candidate starting symbol. Therefore, if the terminal device does not transmit data prior to the target candidate starting symbol, a symbol before the target candidate starting symbol may not be used to determine the SL RSSI, thereby avoiding the problem of underestimated SL RSSI.

The following describes the target candidate starting symbol in detail.

As described above, the target candidate starting symbol may include any candidate starting symbol in the first slot. In other words, a symbol that can be used as a candidate starting symbol may be the target candidate starting symbol.

In an implementation, the target candidate starting symbol may include an N^{th} symbol in symbols included in the first slot. A value of N may be 4, 5, 6, 7, or 8. For example, if the symbols included in the first slot are symbols 0 to 13, the target candidate starting symbol may be the symbol 3, the symbol 4, the symbol 5, the symbol 6, or the symbol 7.

In another implementation, the target candidate starting symbol may include an M^{th} symbol in symbols used for sidelink transmission in the first slot. A value of M may be 4, 5, 6, 7, or 8. For example, the symbols included in the first slot are symbols 0 to 13. Symbols that may be used for sidelink transmission in the symbols 0 to 13 are the symbols 1 to 13. Then, the target candidate starting symbol may be the symbol 4, the symbol 5, the symbol 6, the symbol 7, or the symbol 8. It should be noted that the sidelink transmission may be PSCCH transmission and/or PSSCH transmission.

In some embodiments, the target candidate starting symbol may be determined in one or more of the following manners: configuration by network equipment, pre-configuration, independent determination by the terminal device, or protocol predefinition. The following description is provided using an example in which the target candidate starting symbol is the 2^{nd} candidate starting symbol. In some implementations, it may be predefined in a protocol that the 2^{nd} candidate starting symbol is the symbol 6 in the slot, and the target candidate starting symbol may be the symbol 6. In some implementations, the 2^{nd} candidate starting symbol may be a symbol a (a may be an integer greater than 0), and a value of a may be determined based on network configuration or pre-configuration. For example, it may be configured by the network that a = 6.

If the target candidate starting symbol is determined through configuration, the method shown in FIG. 7 may include step S701.

In step S701, a terminal device receives a first parameter. The first parameter may be transmitted by a network device. That is, step S701 may include: transmitting, by the network device, the first parameter.

The first parameter may be used to configure the target candidate starting symbol. If the first parameter is transmitted by the network device, the network device may configure the target candidate starting symbol by using the first parameter, or the network device may indicate the target candidate starting symbol by using the first parameter. Optionally, the first parameter may be included in the following information: configuration information of a bandwidth part (bandwidth part, BWP) and/or configuration information of a resource pool.

In some embodiments, a measurement manner of the SL RSSI may be determined in one or more of the following manners: configuration by network equipment, pre-configuration, independent determination by the terminal device, or protocol predefinition. The measurement manner of the SL RSSI may include the foregoing method for determining the symbols used to measure the SL RSSI. For example, a measurement manner of the SL RSSI may include one or more of the following manners: the symbols used to measure the SL RSSI may not include the target candidate starting symbol, or the symbols used to measure the SL RSSI may start from the first symbol.

In some implementations, in a case in which the target candidate starting symbol is configured, the method for determining the symbols used to measure the SL RSSI provided in this application may be used. The following description is provided using an example in which the target candidate starting symbol is configured by using the first parameter. In some embodiments, in a case in which the first parameter is configured, the symbols used to measure the SL RSSI may not include the target candidate starting symbol, and/or the symbols used to measure the SL RSSI may start from the 2^{nd} symbol in the first slot. In some embodiments, in a case in which the first parameter is configured, the symbols used to measure the SL RSSI may start from the first symbol.

In some implementations, a measurement manner of the SL RSSI may be configured by using a second parameter. For example, the terminal device may receive the second parameter. The second parameter may be transmitted by the network device, that is, the network device may transmit the second parameter. The terminal device may determine the measurement manner of the SL RSSI based on the second parameter. Optionally, the second parameter may be included in the following information: configuration information of a BWP and/or configuration information of a resource pool.

In some embodiments, configuring the measurement manner of the SL RSSI based on the second parameter may be implemented in one or more of the following manners: when the second parameter is configured or not configured, the symbols used to measure the SL RSSI may not include the target candidate starting symbol; when the second parameter is configured or not configured, the symbols used to measure the SL RSSI may start from the 2^{nd} symbol in the first slot; when the second parameter is configured or not configured, the symbols used to measure the SL RSSI may start from the first symbol; when the second parameter is used to indicate the 1^{st} symbol or the 2^{nd} symbol in the first slot, the symbols used to measure the SL RSSI may not include the target candidate starting symbol, and/or the symbols used to measure the SL RSSI may start from the 2^{nd} symbol in the first slot; when the second parameter is used to indicate the target candidate starting symbol or the first symbol, the symbols used to measure the SL RSSI may start from the first symbol; when the second parameter is a first value, the symbols used to measure the SL RSSI may not include the target candidate starting symbol, and/or the symbols used to measure the SL RSSI may start from the 2^{nd} symbol in the first slot; or when the second parameter is a second value, the symbols used to measure the SL RSSI may start from the first symbol.

It should be noted that the first slot may be used for sidelink transmission. For example, the first slot may be used to transmit a PSCCH and/or a PSSCH.

It should be noted that the embodiments provided in this application may be applied to a scenario in which a plurality of candidate starting symbols are configured in the first slot. In some embodiments, in a case in which a candidate starting symbol or candidate starting symbol enable (enable) is configured in the first slot, a plurality of candidate starting symbols may be configured in the first slot, and a communications device may measure the SL RSSI according to the embodiments provided in this application. In some embodiments, in a case in which no PSFCH resource is configured in the first slot, a plurality of candidate starting symbols may be configured in the first slot, and the communications device may measure the SL RSSI according to the embodiments provided in this application.

It should be noted that, in this application, one sub-channel may correspond to a plurality of PRBs in frequency domain. For example, one sub-channel may correspond to one or more interlaced resources, and each interlaced resource includes a plurality of PRBs. Frequency domain intervals between the plurality of PRBs may be identical. In an implementation, PRBs 1, 6, 11, and 16 may be used as an interlaced resource.

It should be noted that the symbols used to measure the SL RSSI may not include a GP symbol.

The method embodiments of this application are described above in detail with reference to FIG. 1 to FIG. 7. Apparatus embodiments of this application are described below in detail with reference to FIG. 8 to FIG. 10. It should be understood that the descriptions of the method embodiments correspond to descriptions of the apparatus embodiments, and therefore, for parts that are not described in detail, reference may be made to the foregoing method embodiments.

FIG. 8 is a schematic structural diagram of a terminal device 800 according to an embodiment of this application. The terminal device 800 may include a determining unit 810.

The determining unit 810 is configured to determine, based on a target candidate starting symbol, symbols used to measure SL RSSI in a first slot.

In some embodiments, the symbols used to measure the SL RSSI do not include the target candidate starting symbol.

In embodiments, a symbol next to the target candidate starting symbol is a first symbol, and the symbols used to measure the SL RSSI start from the first symbol.

In some embodiments, in a case in which a first condition is met, the symbols used to measure the SL RSSI start from the first symbol, and the first condition includes: no sidelink transmission being detected in a 1^{st} candidate starting symbol in the first slot; and/or sidelink transmission being detected in the target candidate starting symbol.

In some embodiments, in a case that sidelink transmission is detected in a 1^{st} candidate starting symbol in the first slot, the symbols used to measure the SL RSSI start from a 2^{nd} symbol in the first slot.

In some embodiments, the target candidate starting symbol includes a 2^{nd} candidate starting symbol in the first slot.

In some embodiments, the target candidate starting symbol is determined in one or more of the following manners: configuration by network equipment, pre-configuration, independent determination by the terminal device, or protocol predefinition.

In some embodiments, the terminal device 800 further includes: a first receiving unit, configured to receive a first parameter, where the first parameter is used to configure the target candidate starting symbol, and the first parameter is included in the following information: configuration information of a BWP and/or configuration information of a resource pool.

In some embodiments, the terminal device 800 further includes: a second receiving unit, configured to receive a second parameter, where the second parameter is used to configure a measurement manner of the SL RSSI, and the second parameter is included in the following information: configuration information of a BWP and/or configuration information of a resource pool.

In some embodiments, the target candidate starting symbol includes an N^{th} symbol in symbols included in the first slot, and a value of N is 4, 5, 6, 7, or 8.

In some embodiments, the target candidate starting symbol includes an M^{th} symbol in symbols used for sidelink transmission in the first slot, and a value of M is 4, 5, 6, 7, or 8.

In some embodiments, no physical sidelink feedback channel PSFCH resource is configured in the first slot.

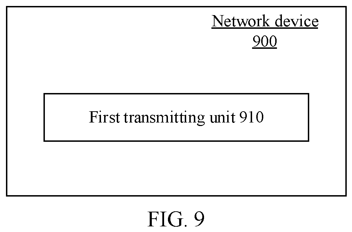

FIG. 9 is a schematic structural diagram of a network device 900 according to an embodiment of this application. The network device 900 may include a first transmitting unit 910.

The first transmitting unit 910 is configured to transmit a first parameter, where the first parameter is used to determine a target candidate starting symbol, and the target candidate starting symbol is used to determine symbols used to measure SL RSSI in a first slot.

In some embodiments, the network device 900 further includes: a second transmitting unit, configured to transmit a second parameter, where the second parameter is used to indicate a measurement manner of the SL RSSI.

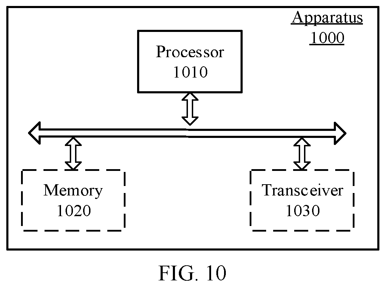

In an optional embodiment, each of the first transmitting unit 910, the second transmitting unit, the first receiving unit, and the second receiving unit may be a transceiver 1020. The determining unit 810 may be a processor 1010. Details are shown in FIG. 10.

FIG. 10 is a schematic structural diagram of a communications apparatus according to an embodiment of this application. Dashed lines in FIG. 10 indicate that a unit or module is optional. The apparatus 1000 may be configured to implement the methods described in the foregoing method embodiments. The apparatus 1000 may be a chip, a terminal device, or a network device.

The apparatus 1000 may include one or more processors 1010. The processor 1010 may support the apparatus 1000 in implementing the methods described in the foregoing method embodiments. The processor 1010 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1000 may further include one or more memories 1020. The memory 1020 stores a program that may be executed by the processor 1010 to cause the processor 1010 to perform the methods described in the foregoing method embodiments. The memory 1020 may be separate from the processor 1010 or may be integrated into the processor 1010.

The apparatus 1000 may further include a transceiver 1030. The processor 1010 may communicate with another device or chip through the transceiver 1030. For example, the processor 1010 may transmit data to and receive data from another device or chip through the transceiver 1030.

An embodiment of this application further provides a computer-readable storage medium for storing a program. The computer-readable storage medium may be applied to the terminal or the network device provided in embodiments of this application, and the program causes a computer to execute the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to execute the methods performed by the terminal or the network device in various embodiments of this application.

An embodiment of this application further provides a computer program. The computer program may be applied to the terminal or the network device provided in embodiments of this application, and the computer program causes a computer to execute the methods performed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, predefinition may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of the embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state drive (solid state drive, SSD)), or the like.

## Claims

1. A method for sidelink communication, comprising:
determining (S710), by a terminal device based on a target candidate starting symbol, symbols used to measure sidelink received signal strength indicator, SL RSSI, in a first slot,
**characterized in that**
a symbol next to the target candidate starting symbol is a first symbol, and the symbols used to measure the SL RSSI start from the first symbol.

2. The method according to claim 1, wherein the symbols used to measure the SL RSSI do not comprise the target candidate starting symbol.

3. The method according to any one of claims 1 to 2, wherein the target candidate starting symbol comprises a 2^{nd} candidate starting symbol in the first slot.

4. The method according to any one of claims 1 to 3, wherein the target candidate starting symbol is determined in one or more of following manners: configuration by network equipment, pre-configuration, independent determination by the terminal device, or protocol predefinition.

5. The method according to any one of claims 1 to 4, further comprising:
receiving (S701), by the terminal device, a first parameter,
wherein the first parameter is used to configure the target candidate starting symbol, and the first parameter is comprised in following information: configuration information of a bandwidth part BWP and/or configuration information of a resource pool.

6. The method according to any one of claims 1 to 5, further comprising:
receiving, by the terminal device, a second parameter,
wherein the second parameter is used to configure a measurement manner of the SL RSSI, and the second parameter is comprised in following information: configuration information of a BWP and/or configuration information of a resource pool.

7. The method according to claim 6, wherein
when the second parameter is not configured, the symbols used to measure the SL RSSI start from a 2^{nd} symbol in the first slot; and/or
when the second parameter is configured, the symbols used to measure the SL RSSI may start from a first symbol, wherein the first symbol is the symbol next to the target candidate starting symbol.

8. The method according to claim 6, wherein
when a value of the second parameter is a first value, the symbols used to measure the SL RSSI start from a 2^{nd} symbol in the first slot; and/or
when a value of the second parameter is a second value, the symbols used to measure the SL RSSI may start from a first symbol, wherein the first symbol is the symbol next to the target candidate starting symbol.

9. The method according to any one of claims 1 to 8, wherein the target candidate starting symbol comprises an N^{th} symbol in symbols comprised in the first slot, and a value of N is 4, 5, 6, 7, or 8.

10. The method according to any one of claims 1 to 9, wherein no physical sidelink feedback channel, PSFCH, resource is configured in the first slot.

11. A method for sidelink communication, comprising:
transmitting (S701), by a network device, a first parameter to a terminal device,
wherein the first parameter is used by the terminal device to determine a target candidate starting symbol, and the target candidate starting symbol is used by the terminal device to determine symbols used to measure sidelink received signal strength indicator, SL RSSI, in a first slot,
**characterized in that**
a symbol next to the target candidate starting symbol is a first symbol, and the symbols used to measure the SL RSSI start from the first symbol.

12. The method according to claim 11, further comprising:
transmitting, by the network device, a second parameter,
wherein the second parameter is used to indicate a measurement manner of the SL RSSI.

13. A terminal device (1000), comprising a memory (1020) and a processor (1010), wherein the memory (1020) is configured to store a program, and the processor (1010) is configured to invoke the program in the memory (1020), to cause the terminal device (1000) to execute the method according to any one of claims 1 to 10.

14. A network device (1000), comprising a memory (1020) and a processor (1030), wherein the memory (1020) is configured to store a program, and the processor (1010) is configured to invoke the program in the memory (1020), to cause the network device (1000) to execute the method according to claim 11 or 12.

## Patentansprüche

1. Verfahren zur Sidelink-Kommunikation, umfassend:
Bestimmen (S710), durch ein Endgerät basierend auf einem Ziel-Kandidaten-Startsymbol, von Symbolen, die zum Messen eines Sidelink-Empfangssignalstärkeindikators, SL RSSI, in einem ersten Schlitz verwendet werden,
**dadurch gekennzeichnet, dass**
ein Symbol neben dem Ziel-Kandidaten-Startsymbol ein erstes Symbol ist und die Symbole, die zum Messen des SL RSSI verwendet werden, ab dem ersten Symbol beginnen.

2. Verfahren nach Anspruch 1, wobei die Symbole, die zum Messen des SL RSSI verwendet werden, das Ziel-Kandidaten-Startsymbol nicht umfassen.

3. Verfahren nach einem der Ansprüche 1 bis 2, wobei das Ziel-Kandidaten-Startsymbol ein 2. Kandidaten-Startsymbol in dem ersten Schlitz umfasst.

4. Verfahren nach einem der Ansprüche 1 bis 3, wobei das Ziel-Kandidaten-Startsymbol auf eine oder mehrere der folgenden Weisen bestimmt wird: Konfiguration durch Netzwerkausrüstung, Vorkonfiguration, unabhängige Bestimmung durch das Endgerät oder Protokollvordefinition.

5. Verfahren nach einem der Ansprüche 1 bis 4, ferner umfassend:
Empfangen (S701), durch das Endgerät, eines ersten Parameters,
wobei der erste Parameter verwendet wird, um das Ziel-Kandidaten-Startsymbol zu konfigurieren, und der erste Parameter in den folgenden Informationen enthalten ist: Konfigurationsinformationen eines Bandbreitenteils BWP und/oder Konfigurationsinformationen eines Ressourcenpools.

6. Verfahren nach einem der Ansprüche 1 bis 5, ferner umfassend:
Empfangen, durch das Endgerät, eines zweiten Parameters,
wobei der zweite Parameter verwendet wird, um eine Messweise des SL RSSI zu konfigurieren, und der zweite Parameter in den folgenden Informationen enthalten ist: Konfigurationsinformationen eines BWP und/oder Konfigurationsinformationen eines Ressourcenpools.

7. Verfahren nach Anspruch 6, wobei
wenn der zweite Parameter nicht konfiguriert ist, die Symbole, die zum Messen des SL RSSI verwendet werden, ab einem 2. Symbol in dem ersten Schlitz beginnen; und/oder
wenn der zweite Parameter konfiguriert ist, die Symbole, die zum Messen des SL RSSI verwendet werden, ab einem ersten Symbol beginnen können, wobei das erste Symbol das Symbol neben dem Ziel-Kandidaten-Startsymbol ist.

8. Verfahren nach Anspruch 6, wobei
wenn ein Wert des zweiten Parameters ein erster Wert ist, die Symbole, die zum Messen des SL RSSI verwendet werden, ab einem 2. Symbol in dem ersten Schlitz beginnen; und/oder
wenn ein Wert des zweiten Parameters ein zweiter Wert ist, die Symbole, die zum Messen des SL RSSI verwendet werden, ab einem ersten Symbol beginnen können, wobei das erste Symbol das Symbol neben dem Ziel-Kandidaten-Startsymbol ist.

9. Verfahren nach einem der Ansprüche 1 bis 8, wobei das Ziel-Kandidaten-Startsymbol ein N-tes Symbol unter Symbolen umfasst, die in dem ersten Schlitz enthalten sind, und ein Wert von N 4, 5, 6, 7 oder 8 ist.

10. Verfahren nach einem der Ansprüche 1 bis 9, wobei keine physische Sidelink-Rückmeldungskanal-, PSFCH-, Ressource in dem ersten Schlitz konfiguriert ist.

11. Verfahren zur Sidelink-Kommunikation, umfassend:
Übertragen (S701), durch eine Netzwerkvorrichtung, eines ersten Parameters an ein Endgerät,
wobei der erste Parameter von dem Endgerät verwendet wird, um ein Ziel-Kandidaten-Startsymbol zu bestimmen, und das Ziel-Kandidaten-Startsymbol von dem Endgerät verwendet wird, um Symbole zu bestimmen, die zum Messen eines Sidelink-Empfangssignalstärkeindikators, SL RSSI, in einem ersten Schlitz verwendet werden,
**dadurch gekennzeichnet, dass**
ein Symbol neben dem Ziel-Kandidaten-Startsymbol ein erstes Symbol ist und die Symbole, die zum Messen des SL RSSI verwendet werden, ab dem ersten Symbol beginnen.

12. Verfahren nach Anspruch 11, ferner umfassend:
Übertragen, durch die Netzwerkvorrichtung, eines zweiten Parameters,
wobei der zweite Parameter verwendet wird, um eine Messweise des SL RSSI anzuzeigen.

13. Endgerät (1000), umfassend einen Speicher (1020) und einen Prozessor (1010), wobei der Speicher (1020) konfiguriert ist, ein Programm zu speichern, und der Prozessor (1010) konfiguriert ist, das Programm in dem Speicher (1020) aufzurufen, um das Endgerät (1000) zu veranlassen, das Verfahren nach einem der Ansprüche 1 bis 10 auszuführen.

14. Netzwerkvorrichtung (1000), umfassend einen Speicher (1020) und einen Prozessor (1030), wobei der Speicher (1020) konfiguriert ist, ein Programm zu speichern, und der Prozessor (1010) konfiguriert ist, das Programm in dem Speicher (1020) aufzurufen, um die Netzwerkvorrichtung (1000) zu veranlassen, das Verfahren nach Anspruch 11 oder 12 auszuführen.

## Revendications

1. Procédé de communication par liaison latérale, comprenant :
déterminer (S710), par un dispositif terminal sur la base d'un symbole de départ candidat cible, des symboles utilisés pour mesurer un indicateur d'intensité de signal reçu par liaison latérale, SL RSSI, dans un premier créneau temporel,
**caractérisé en ce que**
un symbole voisin du symbole de départ candidat cible est un premier symbole, et les symboles utilisés pour mesurer le SL RSSI débutent à partir du premier symbole.

2. Procédé selon la revendication 1, dans lequel les symboles utilisés pour mesurer le SL RSSI ne comprennent pas le symbole de départ candidat cible.

3. Procédé selon l'une quelconque des revendications 1 à 2, dans lequel le symbole de départ candidat cible comprend un 2ème symbole de départ candidat dans le premier créneau temporel.

4. Procédé selon l'une quelconque des revendications 1 à 3, dans lequel le symbole de départ candidat cible est déterminé selon une ou plusieurs des manières suivantes : configuration par un équipement de réseau, pré-configuration, détermination indépendante par le dispositif terminal, ou prédéfinition par protocole.

5. Procédé selon l'une quelconque des revendications 1 à 4, comprenant en outre :
recevoir (S701), par le dispositif terminal, un premier paramètre,
dans lequel le premier paramètre est utilisé pour configurer le symbole de départ candidat cible, et le premier paramètre est compris dans les informations suivantes : des informations de configuration d'une partie de bande passante BWP et/ou des informations de configuration d'un ensemble de ressources.

6. Procédé selon l'une quelconque des revendications 1 à 5, comprenant en outre :
recevoir, par le dispositif terminal, un second paramètre,
dans lequel le second paramètre est utilisé pour configurer une manière de mesure du SL RSSI, et le second paramètre est compris dans les informations suivantes : des informations de configuration d'une BWP et/ou des informations de configuration d'un ensemble de ressources.

7. Procédé selon la revendication 6, dans lequel
lorsque le second paramètre n'est pas configuré, les symboles utilisés pour mesurer le SL RSSI débutent à partir d'un 2ème symbole dans le premier créneau temporel ; et/ou
lorsque le second paramètre est configuré, les symboles utilisés pour mesurer le SL RSSI peuvent débuter à partir d'un premier symbole, dans lequel le premier symbole est le symbole voisin du symbole de départ candidat cible.

8. Procédé selon la revendication 6, dans lequel
lorsqu'une valeur du second paramètre est une première valeur, les symboles utilisés pour mesurer le SL RSSI débutent à partir d'un 2ème symbole dans le premier créneau temporel ; et/ou
lorsqu'une valeur du second paramètre est une seconde valeur, les symboles utilisés pour mesurer le SL RSSI peuvent débuter à partir d'un premier symbole, dans lequel le premier symbole est le symbole voisin du symbole de départ candidat cible.

9. Procédé selon l'une quelconque des revendications 1 à 8, dans lequel le symbole de départ candidat cible comprend un Nème symbole parmi des symboles compris dans le premier créneau temporel, et une valeur de N est 4, 5, 6, 7 ou 8.

10. Procédé selon l'une quelconque des revendications 1 à 9, dans lequel aucune ressource de canal physique de retour d'information par liaison latérale, PSFCH, n'est configurée dans le premier créneau temporel.

11. Procédé de communication par liaison latérale, comprenant :
transmettre (S701), par un dispositif de réseau, un premier paramètre à un dispositif terminal,
dans lequel le premier paramètre est utilisé par le dispositif terminal pour déterminer un symbole de départ candidat cible, et le symbole de départ candidat cible est utilisé par le dispositif terminal pour déterminer des symboles utilisés pour mesurer un indicateur d'intensité de signal reçu par liaison latérale, SL RSSI, dans un premier créneau temporel,
**caractérisé en ce que**
un symbole voisin du symbole de départ candidat cible est un premier symbole, et les symboles utilisés pour mesurer le SL RSSI débutent à partir du premier symbole.

12. Procédé selon la revendication 11, comprenant en outre :
transmettre, par le dispositif de réseau, un second paramètre,
dans lequel le second paramètre est utilisé pour indiquer une manière de mesure du SL RSSI.

13. Dispositif terminal (1000), comprenant une mémoire (1020) et un processeur (1010), dans lequel la mémoire (1020) est configurée pour stocker un programme, et le processeur (1010) est configuré pour invoquer le programme dans la mémoire (1020), afin d'amener le dispositif terminal (1000) à exécuter le procédé selon l'une quelconque des revendications 1 à 10.

14. Dispositif de réseau (1000), comprenant une mémoire (1020) et un processeur (1030), dans lequel la mémoire (1020) est configurée pour stocker un programme, et le processeur (1010) est configuré pour invoquer le programme dans la mémoire (1020), afin d'amener le dispositif de réseau (1000) à exécuter le procédé selon la revendication 11 ou 12.
